# EUROPÄISCHE PATENTANMELDUNG

(11) **EP 1 170 538 A2**
(43) Veröffentlichungstag der Anmeldung: **09.01.2002**
(21) Anmeldenummer: 00124883.0
(22) Anmeldetag: 15.11.2000
(51) Int. Cl.: F16L 21/03

(54) **Dichtungsring für eine Steckmuffenrohrverbindung**

(30) Priorität: 07.07.2000 DE 10033096
(71) Anmelder: M.O.L. GUMMIVERARBEITUNG GMBH & Co., D-49377 Vechta (DE)
(72) Erfinder: Lamping, Alwin, 49393 Lohne (DE)
(74) Vertreter: Meyer, Ludgerus A.

(57) **Zusammenfassung**

Die Erfindung betrifft einen Dichtungsring für eine Steckmuffenrohrverbindung mit einem umlaufenden Spannring (6), der in einer nach innen offenen Ausnehmung des Dichtungsrings aufgenommen ist. Der Dichtungsring ist bezüglich seiner Ringebene spiegelsymmetrisch gestaltet. Erfindungsgemäß weist der Dichtungsring zwei sich gegenüberliegende, jeweils entgegengesetzt schräg nach innen zur Symmetrieebene (3) des Dichtungsrings gerichtete Lippendichtungen (1,2) auf. Die Lippendichtungen (1,2) bilden im unbelasteten Zustand des Dichtungsrings ohne eingesetzten Spannring (6) eine im wesentlichen U-förmige Ausnehmung für die Aufnahme des Spannrings (6). Durch das Einlegen des Dichtungsrings mit Spannring in die Ringsicke einer Muffe eines Rohrendes werden die Lippendichtungen (1,2) jeweils in Richtung der Symmetrieebene (3) abgelenkt und mit ihren inneren Randabschnitten gegeneinander gedrückt. Es entsteht zwischen ihnen und dem Spannring (6) ein mit einem Gleitmittel (10) befüllbarer Hohlraum (9). Der Vorteil der Erfindung liegt insbesondere darin, daß der Dichtungsring bereits beim Einlegen in die Ringsicke eines Rohrendes mit einem Gleitmittel (10) befüllbar ist. (Fig. 2).

## Beschreibung

Die Erfindung betrifft einen Dichtungsring für eine Steckmuffenrohrverbindung mit einem umlaufenden Spannring nach dem Oberbegriff des Anspruchs 1.

Dichtungsringe dieser Art werden in der Regel zur Verbindung zweier Rohre, wie Kunststoff-Abwasserrohre, verwendet, die in Ringsicken des Muffenendes eines Rohres eingesetzt werden. Wenn das Spitzende eines zweiten Rohres in das Muffenende des ersten Rohres eingeschoben wird, legen sich die Dichtlippen des Dichtungsrings eng an das einzuschiebende Rohr an, so daß normalerweise die Abdichtung gewährleistet ist.

Der Spannring eines derartigen Dichtungsringes ist relativ starr und besteht zum Beispiel aus Stahl oder Kunststoff. Daher werden derartige Dichtungsringe bereits bei der Herstellung des Rohres in die Ringsicken der Muffen eingesetzt. In der Regel ist damit auch eine Unverlierbarkeit des Dichtungsrings gewährleistet sowie die Gefahr von Verschmutzungen zwischen Dichtungsring und Sickengrund der Muffe verringert, wie sie insbesondere im rauhen Baustellenbetrieb leicht gegeben ist.

Aus der DE 197 13 329 A1 ist ein Dichtungsring für Steckmuffenverbindungen mit einem Spannring bekannt, bei dem die Dichtlippe unter einem Neigungswinkel schräg zum Lippensockel verläuft und der Dichtungsring auf der der Lippendichtung gegenüberliegenden Seite eine Endverdickung aufweist, auf der beim Einschieben des Spitzendes eines Rohres ein Teil der Lippendichtung zur Auflage kommt. Dadurch wird die Endverdickung zusammengedrückt und erhöht somit die Andruckkraft der Lippendichtung.

Bei dieser bekannten Art von Dichtungsringen weisen diese nur eine einzige Abdichtlippe auf, die an dem einzuschiebenden Spitzende eines Rohres anliegt. Daher besteht die Gefahr, daß mögliche Verschmutzungen der Lippendichtung eine Undichtigkeit der Rohrverbindung zur Folge haben. Darüber hinaus ergibt sich beim Ablenken der Lippendichtung aufgrund des einzuschiebenden Spitzendes eine starke Verkeilung des Lippengrundes an einer Kante des Spannrings, so daß leicht die Gefahr einer Beschädigung der Lippendichtung besteht.

In der älteren DE 199 00 302 ist eine Dichtung beschrieben, bei der eine rückwärtige Andruckdichtung eine vordere Auflauffläche aufweist, auf der bei dem Einschieben des Spitzendes eines weiteren Rohres eine Lippendichtung zur Anlage kommt, wodurch die Andruckdichtung in die Einschubrichtung ausgelenkt wird.

Die vorgenannten Dichtungsringe enthalten jeweils einen Spannring aus Metall oder Kunststoff, wodurch einerseits verhindert wird, daß der Dichtungsring verlorengeht, andererseits ermöglicht wird, daß der Dichtungsring bereits bei der Herstellung eines Rohres in eine Muffe eingesetzt wird.

Bei nahezu allen Dichtungsringen wird bei einer späteren Verbindung zweier Rohre ein Gleitmittel verwendet, welches den Einschub des Spitzendes eines zweiten Rohres in das Muffenende eines ersten Rohres zum einen erleichtert und zum anderen die Gefahr von Beschädigungen an dem Dichtungsring durch eine mögliche Verdrehung des Dichtungsrings durch das Spitzende des einzuschiebenden Rohres verringert. Dieses Gleitmittel kommt bei den bekannten Verfahren unmittelbar vor der Montage zum Einsatz, was einen höheren Arbeitsaufwand bedeutet. Darüber hinaus kann im Baustellenbetrieb ein sauberes Arbeiten nicht immer gewährleistet werden, so daß leicht die Gefahr besteht, daß sich während der Montage Verschmutzungen zwischen den Rohren bzw. zwischen Dichtungsring und Sickengrund der Muffe ansammeln, die die Abdichtung der Rohre beeinträchtigen können.

Der Erfindung liegt die Aufgabe zugrunde, einen Dichtungsring zum Einsetzen in eine Ringsicke einer Muffe eines Rohres anzugeben, bei dem das Aufbringen eines Gleitmittels auf den Dichtungsring und/oder auf das Spitzende eines einzuführenden Rohres bei dem Verbinden zweier Rohre nicht erforderlich ist, gleichzeitig aber ein leichtes Einführen eines zweiten Rohres in das Muffenende des ersten Rohres möglich ist.

Diese Aufgabe wird durch die im Anspruch 1 beanspruchte Erfindung gelöst. Vorteilhafte Weiterbildungen der Erfindung sind in Unteransprüchen angegeben.

Die Erfindung geht aus von einem spiegelsymmetrisch gestalteten Dichtungsring mit einem umlaufenden Spannring und mit zwei sich gegenüberliegenden Lippendichtungen für eine Steckmuffenrohrverbindung, der in eine im wesentlichen rechteckige Ringsicke des Muffenendes eines Rohrendes einsetzbar ist. Erfindungsgemäß werden durch das Einsetzen des Dichtungsrings mit Spannring in eine Ringsicke eines Rohrendes im wesentlichen die zwei jeweils entgegengesetzt schräg nach innen zur Symmetrieebene des Dichtungsrings gerichteten Lippendichtungen so abgelenkt, daß sie mit ihren inneren Randabschnitten gegeneinander gedrückt werden und zwischen ihnen und dem Spannring ein Hohlraum zur Aufnahme eines Gleitmittels entsteht.

Bei der Erfindung wird daher der Dichtungsring bereits bei seiner Herstellung sowohl mit dem Spannring ausgestattet und beim Einsetzen in die Ringsicke eines Rohrendes mit dem Gleitmittel befüllt. Durch den Wegfall des Gleitmittels während der späteren Montage zweier Rohre wird diese erleichtert und ist schneller und sicherer durchführbar. Neben der Zeitersparnis wird auch einer Fehlerquelle durch ein nicht fachgerechtes Auftragen des Gleitmittels vorgebeugt sowie die Gefahr von Verschmutzungen an den Rohren und/oder dem Dichtungsring, die während des Auftragens des Gleitmittels auf der Baustelle leicht gegeben sind, verringert, so daß einer Beeinträchtigung der Abdichtung der Rohre durch diese Faktoren in hohem Maß entgegengewirkt wird.

Ein weiterer Vorteil der vorliegenden Erfindung ist durch den bezüglich der Ringebene spiegelsymmetrischen Aufbau des Dichtungsrings gegeben, wodurch dieser unabhängig von seiner Einbaustellung in einer Ringsicke verwendet werden kann. Einem Einsetzen des Dichtungsrings in eine Ringsicke in fehlerhafter Orientierung wird somit vorgebeugt.

Vorzugsweise kommt beim Einführen eines Spitzendes eines zweiten Rohres in das Muffenende des ersten Rohres die jeweils vordere Lippendichtung auf einem zu dieser rückwärtig angeordneten Kompressionssteg zur Auflage, während die jeweils rückwärtige Lippendichtung auf dem Spannring zur Auflage kommt, wodurch das Gleitmittel aus dem Hohlraum gedrückt wird und zwischen dem Spitzende des zweiten Rohres und dem Dichtungsring verteilt wird.

In einer bevorzugten Ausführung bildet der Außenumfang des Dichtungsrings in unbelastetem Zustand einen konkaven Bogen aus.

Die Erfindung wird nachstehend anhand eines Ausführungsbeispiels näher erläutert. Es zeigen:
- Fig. 1: eine Querschnittsansicht eines erfindungsgemäßen Dichtungsrings in unbelastetem Zustand ohne Spannring,
- Fig. 2: eine Querschnittsansicht eines erfindungsgemäßen Dichtungsrings im in einer Ringsicke eines Muffenendes eines Rohres eingesetzten Zustand,
- Fig. 3: eine Querschnittsansicht eines erfindungsgemäßen Dichtungsrings in einer Ringsicke während des Einsteckens des Spitzendes eines zweiten Rohres in das mit einem Dichtungsring versehene erste Rohr.
- Fig. 4: eine Querschnittsansicht eines erfindungsgemäßen Dichtungsrings in einer Ringsicke, bei dem das Spitzende eines zweiten Rohres in das mit einem Dichtungsring versehenden erste Rohr vollständig eingesteckt ist.

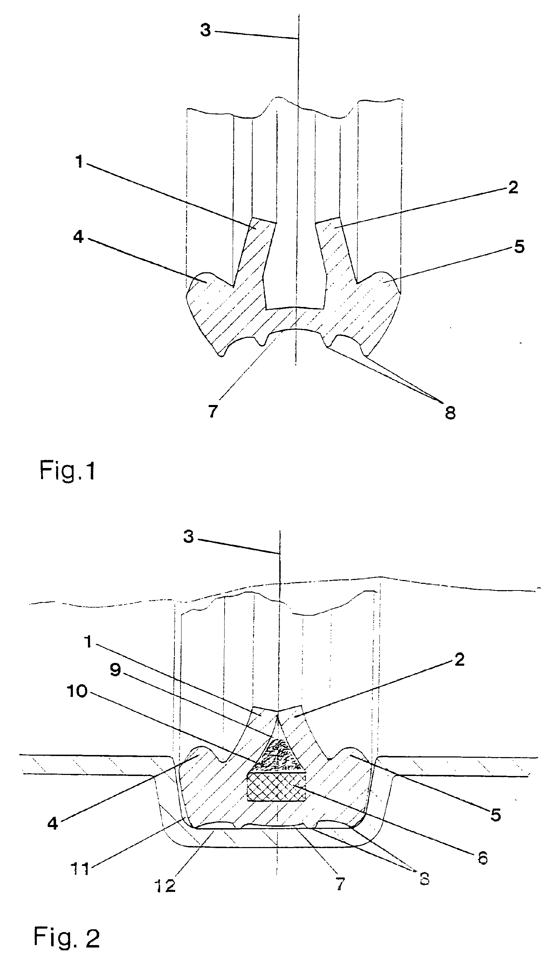

Fig. 1 zeigt einen Dichtungsring gemäß vorliegender Erfindung in unbelastetem Zustand ohne Spannring, der in Bezug auf eine Symmetrieebene 3 spiegelsymmetrisch aufgebaut ist. Auf der linken Hälfte der Symmetrieebene 3 des Dichtungsrings befindet sich eine schräg nach innen zur Symmetrieebene 3 gerichtete Lippendichtung 1, die einen zu dieser rückwärtig angeordneten Kompressionssteg 4 überragt. Auf der der Symmetrieebene 3 gegenüberliegenden rechten Hälfte ist eine zweite Lippendichtung 2 entsprechend entgegengesetzt zu der ersten Lippendichtung 1 schräg nach innen zur Symmetrieebene 3 gerichtet, die ebenfalls einen rückwärtig angeordneten Kompressionssteg 5 überragt. Die Anstellwinkel der Lippendichtungen 1,2 zur Symmetrieebene 3 stimmen überein. Die Anordnung der Lippendichtungen formt zwischen diesen eine im wesentlichen U-förmige Ausnehmung des Dichtungsrings, die zur späteren Aufnahme eines Spannrings 6 dient. Der Außenumfang des Dichtungsrings 7 bildet einen konkaven Bogen aus und ist mit vier Stützstegen 8 versehen.

In Fig. 2 ist ein Dichtungsring gemäß vorliegender Erfindung mit eingesetztem Spannring 6 und mit einem Gleitmittel 10 befüllt gezeigt, der in eine Ringsicke 11 einer Muffe eines Rohrendes eingesetzt ist. Durch das Einlegen des Dichtungsrings mit Spannring 6 in die Ringsicke 11 eines Rohrendes werden die Lippendichtungen 1,2 derart in Richtung auf die Symmetrieebene 3 abgelenkt, daß sie mit ihren inneren Randabschnitten gegeneinander gedrückt werden und zwischen den Lippendichtungen 1,2 und dem Spannring 6 ein Hohlraum 9 entsteht. Dieser Hohlraum 9 wird mit einem Gleitmittel 10 befüllt, indem z. B. eine Düse durch die Lippendichtungen 1,2 in den Hohlraum 9 geführt wird und bei ihrem Umlauf um den Dichtungsring Gleitmittel 10 in den Hohlraum 9 einführt.

Durch den Spannring 6 wird eine erhöhte Andruckkraft auf die Stützstege 8 an den Sickengrund 12 erzielt. Daneben übernehmen die Stützstege 8 eine Abdichtungsfunktion des Dichtungsrings gegenüber dem Sickengrund 12.

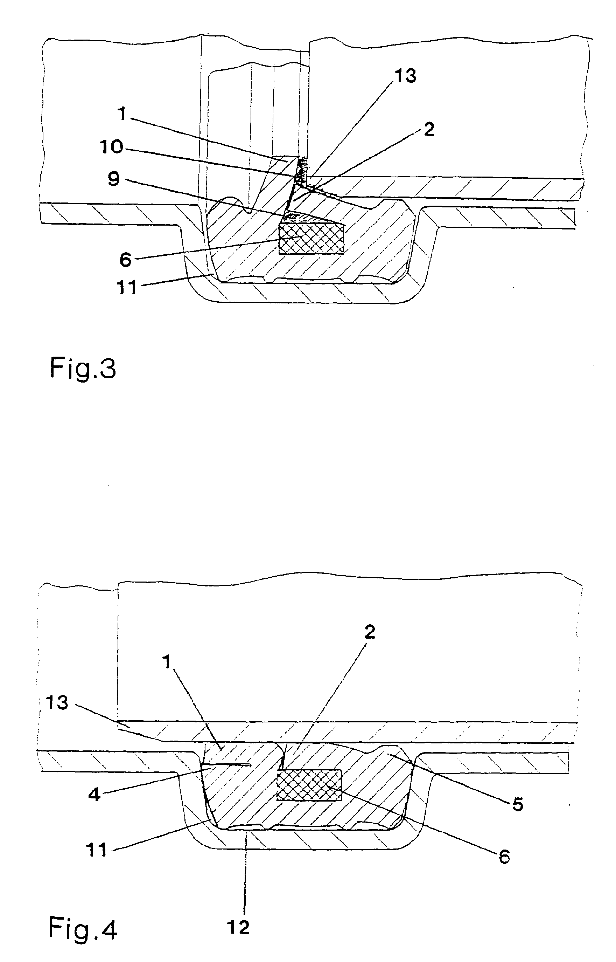

In Fig. 3 ist ein in eine Ringsicke 11 eingesetzter erfindungsgemäßer Dichtungsring während des Einführens eines Spitzendes 13 eines zweiten Rohres in das Muffenende eines ersten Rohres dargestellt. Das Spitzende 13 des zweiten Rohres lenkt die rückwärtige Lippendichtung 2 in Richtung auf den Spannring 6 ab, so daß die Lippendichtung 2 auf dem Spannring 6 zur Auflage kommt. Hierbei wird das in dem Hohlraum 9 befindliche Gleitmittel 10 durch die Lippendichtung 2 herausgedrückt und gelangt vor das Spitzende 13 und zwischen das Spitzende 13 und die äußere Seitenflanke der Lippendichtung 2. Ein leichtes Zurückziehen des eingeführten Rohres gewährleistet eine bessere Verteilung des Gleitmittels zwischen dem Dichtungsring und dem eingeführten Rohr sowie zwischen den beiden Rohren und verringert die Gefahr einer Beschädigung des Dichtungsrings durch eine Verdrehung des Dichtungsrings durch das Spitzende des eingeführten Rohres und einer damit möglicherweise einhergehenden verschlechterten Abdichtung.

Fig. 4 zeigt den Zustand eines in eine Ringsicke eingesetzten erfindungsgemäßen Dichtungsrings nach vollständigem Einführen eines zweiten Rohres in das Muffenende eines ersten Rohres. Nachdem die rückwärtige Lippendichtung 2, wie vorangehend beschrieben, durch den Einschub des Spitzende 13 eines zweiten Rohres umgelenkt wurde, wird durch den fortgesetzten Einschub des Spitzendes 13 die vordere Lippendichtung 1 in Richtung auf den zu dieser rückwärtig angeordneten Kompressionssteg 4 umgelenkt und kommt auf diesem zur Auflage. Durch den Druck, der hierbei auf den Kompressionssteg 4 ausgeübt wird, wird eine hohe Andruckkraft ausgeübt, wodurch dessen Seitenflanke an die Seitenflanke der Ringsicke 11 gedrückt wird. Eine weitere Abdichtungsfunktion wird durch das Andrücken der Stützstege 8 an den Sickengrund 12 erreicht.

### Bezugszeichenliste

- 1: erste Lippendichtung
- 2: zweite Lippendichtung
- 3: Symmetrieebene
- 4: erster Kompressionssteg
- 5: zweiter Kompressionssteg
- 6: Spannring
- 7: Außenumfang des Dichtungsrings
- 8: Stützstege
- 9: Hohlraum
- 10: Gleitmittel
- 11: Ringsicke
- 12: Sickengrund
- 13: Spitzende eines zweiten Rohres

## Patentansprüche

1. Dichtungsring für eine Steckmuffenrohrverbindung mit einem umlaufenden Spannring (6), der in einer nach innen offenen Ausnehmung des Dichtungsrings aufgenommen ist, zum Einsetzen in eine im Querschnitt im wesentlichen rechteckige Ringsicke (11) des Muffenendes eines Rohrendes (13), wobei der Dichtungsring bezüglich seiner Ringebene spiegelsymmetrisch gestaltet ist und zwei sich gegenüberliegende Lippendichtungen (1,2) aufweist, **dadurch gekennzeichnet, daß** die jeweils entgegengesetzt schräg nach innen zur Symmetrieebene (3) des Dichtungsrings gerichteten Lippendichtungen (1,2) im unbelasteten Zustand des Dichtungsrings eine im wesentlichen U-förmige Ausnehmung für die Aufnahme des Spannrings (6) bilden und daß die Lippendichtungen (1,2) durch das Einsetzen des Dichtungsrings mit eingesetztem Spannring (6) in die Ringsicke (11) des Muffenendes eines Rohrendes jeweils in Richtung der Symmetrieebene (3) ablenkbar sind, so daß sie mit ihren inneren Randabschnitten gegeneinander gedrückt werden und zwischen ihnen und dem Spannring (6) ein Hohlraum (9) zur Aufnahme eines Gleitmittels (10) entsteht.

2. Dichtungsring nach Anspruch 1, **dadurch gekennzeichnet, daß** zwei in Axialrichtung äußere radial nach innen gerichtete Kompressionsstege (4,5) vorgesehen sind, auf denen die bei Einschub eines Spitzendes eines Rohres jeweils vordere Lippendichtung (1 bzw. 2) zur Auflage kommt und daß die jeweils rückwärtige Lippendichtung (1 bzw. 2) auf dem Spannring (6) zur Auflage kommt.

3. Dichtungsring nach Anspruch 1 oder 2, **dadurch gekennzeichnet, daß** das in den Hohlraum (9) eingeführte Gleitmittel (10) ein Silicon-Gleitmittel ist.

4. Dichtungsring nach Anspruch 1, 2 oder 3, **dadurch gekennzeichnet, daß** die Lippendichtungen (1,2) im wesentlichen einen rechteckigen Querschnitt aufweisen.

5. Dichtungsring nach einem der Ansprüche 1 bis 4, **dadurch gekennzeichnet, daß** der Außenumfang des Dichtungsrings (7) vor dem Einlegen in die Ringsicke (11) einen konkaven Bogen ausbildet.

6. Dichtungsring nach einem der Ansprüche 1 bis 5, **dadurch gekennzeichnet, daß** der Außenumfang des Dichtungsrings (7) mit mehreren ringförmigen Stützstegen (8) versehen ist.
